# EUROPÄISCHE PATENTSCHRIFT

(11) **EP 3 117 444 B1**
(45) Veröffentlichungstag und Bekanntmachung des Hinweises auf die Patenterteilung: **04.10.2017**
(21) Anmeldenummer: 15704965.1
(22) Anmeldetag: 22.01.2015
(51) Int. Cl.: H01F 7/16

(54) **ELEKTROMAGNETVENTIL SOWIE SICHERHEITSRELEVANTES PNEUMATIKSYSTEM**
ELECTROMAGNETIC VALVE AND SAFETY-RELATED PNEUMATIC SYSTEM
ÉLECTROVANNE ET SYSTÈME PNEUMATIQUE AYANT UN IMPACT SUR LA SÉCURITÉ

(30) Priorität: 11.03.2014 DE 102014103246
(43) Veröffentlichungstag der Anmeldung: 18.01.2017
(73) Patentinhaber: Eto Magnetic GmbH, 78333 Stockach (DE)
(72) Erfinder: RAFF, Viktor, 78467 Konstanz (DE); THODE, Oliver, 78333 Stockach (DE)
(74) Vertreter: Wagner, Kilian
(86) Internationale Anmeldenummer: PCT/EP2015/051286
(87) Internationale Veröffentlichungsnummer: WO 2015/135673

(56) Entgegenhaltungen:
- EP-A2- 0 418 502
- CH-A- 481 336

## Beschreibung

Die Erfindung betrifft ein Elektromagnetventil, insbesondere für sicherheitsrelevante Pneumatiksysteme in Kraftfahrzeugen, gemäß dem Oberbegriff des Anspruchs 1 mit einem durch Bestromen einer elektrischen Wicklung axial innerhalb eines Innenkanals eines die Wicklungen an einem Wicklungsabschnitt tragenden Spulenträgers relativ zu einem Kern sowie relativ zu einem ersten Ventilsitz verstellbaren Anker. Ferner betrifft die Erfindung ein sicherheitsrelevantes Pneumatiksystem, insbesondere ein Pneumatik-Bremssystem für Kraftfahrzeuganwendungen, insbesondere für Nutzfahrzeuganwendungen bevorzugt ein ABS- oder EBS-System gemäß Anspruch 15.

Aus der DE 93 000 39 U1 ist ein Elektromagnetventil bekannt, dessen verstellbarer Anker bei seiner axialen Verstellbewegung am Innenumfang eines Spulenträgers geführt ist. Die DE 41 39 670 C2 zeigt ein alternatives Elektromagnetventil, bei dem eine derartige Ankerführung ebenfalls realisiert ist. Darüber hinaus zeigt die Druckschrift die einteilige Ausbildung des Ventilsitzes mit dem Spulenträger. Nachteilig bei dem bekannten Elektromagnetventil ist jedoch der notwendigerweise massive Anker, was ein hohes Gewicht und hohe Herstellungskosten verursacht. Die Dämpfung gegenüber dem Kern ist zudem aufwändig über einen im Anker platzierten Federstift realisiert. Die Dichtungsfunktion gegenüber dem Ventilsitz wird über ein axial von dem Federstift beabstandetes Dichtelement gelöst.

Vorstehende Bauformen von Elektromagnetventilen haben sich nicht für sicherheitsrelevante Anwendungen, beispielsweise für ABS- oder EBS-Bremsventile in Nutzfahrzeug-Druckluftbremsen durchgesetzt, da deren Funktionstüchtigkeit nicht unter allen Einsatzbedingungen gewährleistet ist. So kann es im Extremfall, beispielsweise durch eine ungewollte Überbestromung zu einer Überhitzung der Wicklung (Spule) kommen, wodurch der Spulenträger seinen Innendurchmesser, der bei den bekannten Ausführungsformen das Führungsspiel zum Anker definiert, verringern, was die Gefahr von Ankerklemmern mit sich bringt. Dies ist darauf zurückzuführen, dass die Wicklung, die mit einem entsprechenden Wickelzug aufgebracht ist, dafür verantwortlich ist, dass der Kunststoff des Spulenträgers bei einer Erwärmung sich nicht oder nur in einem geringen Maß nach außen ausdehnt, sondern nach radial innen gezwungen wird, was zu der vorerwähnten, problematischen Verringerung des Spulenträgerinnendurchmessers führt.

Aus der DE 10 2005 039 640 A1 ist ein Elektromagnetventil für Pneumatiksysteme in Kraftfahrzeugen bekannt, das einen durch Bestromen einer elektrischen Wicklung innerhalb eines Innenkanals eines die Wicklung tragenden Spulenträgers relativ zu einem Kern sowie relativ zu einem ersten Ventilsatz verstellbaren Anker aufweist.

Zum weiteren Stand der Technik, der sich mit Elektroventilen beschäftigt werden die DE 10 2008 042 731 A1, die US 2010/0252761 A1, die DE 10 2008 060 483 A1, die DE 10 2006 055 833 A1, die DE 10 2004 001 565 A1, die DE 102 53 769 A1 und die US 4 341 241 A genannt.

Ausgehend von dem vorgenannten Stand der Technik liegt der Erfindung daher die Aufgabe zugrunde, ein Elektromagnetventil mit einem zur Begrenzung der axialen Baulänge innerhalb eines Innenkanals eines Spulenträgers verstellbaren Anker anzugeben, bei dem die Gefahr von Ankerklemmern minimiert wird, insbesondere um das Elektromagnetventil für sicherheitsrelevante Pneumatiksysteme in Kraftfahrzeugen, insbesondere in Nutzfahrzeugen einsetzen zu können. Ferner besteht die Aufgabe darin, ein sicherheitsrelevantes Pneumatiksystem, insbesondere ein Bremssystem mit mindestens einem solchen Elektromagnetventil anzugeben.

Diese Aufgabe wird hinsichtlich des Elektromagnetventils mit den Merkmalen des Anspruchs 1 gelöst, d.h. bei einem gattungsgemäßen Elektromagnetventil dadurch, dass in dem Anker ein Führungskanal vorgesehen ist, in den axial ein einteilig mit dem Spulenträger ausgebildeter Führungsdorn zum Führen des Ankers bei seiner axialen Verstellbewegung hineinragt. Hinsichtlich des sicherheitsrelevanten Pneumatiksystems wird die Aufgabe mit den Merkmalen des Anspruchs 15 gelöst.

Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Der Erfindung liegt der Gedanke zugrunde, zur Vermeidung von Ankerklemmern und zur gleichzeitigen, zumindest abschnittsweisen Aufnahme des bevorzugt als Hülsenstumpf oder Hülse ausgebildeten Ankers innerhalb eines Innenkanals des Spulenträgers den Anker nicht oder nicht ausschließlich wie im Stand der Technik an seinem Außenumfang zu führen, sondern stattdessen eine Ankerinnenführung zu realisieren, und zwar über einen axialen Führungsdom, an dessen Außenumfang der Anker mit dem einen Führungsdurchmesser aufweisenden Innenumfang eines im Anker vorgesehenen Führungskanals geführt ist, wobei der Führungsdorn zur Gewährleistung einer optimalen Achsparallelität und zur Minimierung des Montageaufwandes einteilig mit dem Spulenträger (Wicklungsträger) ausgebildet ist und axial in einen die Wicklung tragenden Wicklungsabschnitt des Spulenträgers hineinragt. Anders ausgedrückt erstreckt sich der Spulenträger in axialer Richtung über seinen mit Wicklung versehenen Wicklungsabschnitt hinaus, um dann in einem Bereich radial weiter innen nach axial zurück in den Wicklungsabschnitt hinein zu ragen und den Anker in einem Bereich innerhalb des Wicklungsabschnittes bei seiner axialen Verstellbewegung zu führen. Hierdurch ist es möglich, den Radialspalt (Luftspalt) zwischen dem Ankeraußendurchmesser und dem Spulenträgerinnendurchmesser, genauer dem Innenkanalinnendurchmesser zu vergrö-ßern, so dass selbst bei einer Verringerung des Innenkanalinnendurchmessers, in Folge einer Überhitzung, keine Gefahr des Ankerklemmers mehr besteht. Der Führungsdorn selbst befindet sich dabei ausreichend radial beabstandet von dem kritischen Heißbereich der Wicklung, insbesondere auch beabstandet über den Anker selbst, so dass eine mögliche temperaturbedingte Ausdehnung des Außendurchmessers des Führungsdoms vergleichsweise gering ausfällt, mit der Folge, dass das Führungsspiel zwischen dem Außendurchmesser des Führungsdoms und dem Innenumfang des Ankers wesentlich geringer ausgelegt werden kann. Dies wiederum beeinflusst vorteilhaft den tribologischen Verschleiß und garantiert somit bei gleichzeitig minimierter Gefahr von Ankerklemmern die Lebensdauer des nach dem Konzept der Erfindung ausgebildeten Elektromagnetventils, was dieses für den Einsatz in sicherheitsrelevanten KfZ-Pneumatik-Systemen prädestiniert.

Bevorzugt ist der Anker am Führungsdom über mindestens die Hälfte der Ankeraxialerstreckung geführt. Bei Bedarf kann der Anker bei einer axialen Verstellbewegung zusätzlich zu der realisierten Ankerinnenführung an seinem Außenumfang am Spulenträger geführt sein, bevorzugt, zumindest abschnittsweise, weiter bevorzugt vollständig axial außerhalb des Wicklungsabschnittes.

Das nach dem Konzept der Erfindung ausgebildete Elektromagnetventil kann ausschließlich mit einem, nämlich dem ersten, Ventilsitz ausgebildet werden und dann bevorzugt in der Bauform als 2/2 Wegeventil, wobei der einzige (erste) Ventilsitz dann alternativ am Führungsdom vorgesehen sein kann, insbesondere stirnseitig an diesem durch einteilige Ausbildung mit dem Führungsdom, was bevorzugt ist oder gegenüberliegend im Bereich des Kerns, entweder unmittelbar am Kern ausgebildet oder an einem im Kern aufgenommenen, vorzugsweise diesen durchsetzenden Ventilsitzbauteil. Die Ausführungsform mit am Führungsdom vorgesehenem ersten Ventilsitz eignet sich besonders für eine im unbestromten Zustand geschlossene Ausführungsform, insbesondere bei axial zwischen dem Anker und dem Kern angeordneter Rückstellfeder, während sich die Ausführungsform mit im Bereich des Kerns angeordnetem einzigen Ventilsitz besonders als im unbestromten Zustand offene Ausführungsform eignet, ebenfalls bei axial zwischen Kern und Anker vorgesehener Rückstellfeder. Bei einer Ausführungsform als im unbestromten Zustand geschlossenes Ventil ist es bevorzugt, wenn ein dem ersten Ventilsitz unmittelbar zugeordneter, zu einem Versorgungsanschluss führender Versorgungskanal, vorzugsweise als Zentralkanal innerhalb des Ankers verläuft und die Druckluft über am Außenumfang des Führungsdoms vorgesehene Kanäle bzw. zumindest einen solchen Kanal wieder abgeführt bzw. zu einem Arbeitsanschluss geleitet wird.

Alternativ ist, wie erwähnt, die Ausführung mit zwei Ventilsitzen realisierbar, nämlich einem ersten Ventilsitz und einem axial davon beabstandeten zweiten Ventilsitz, wobei einer der Ventilsitze am Führungsdom vorgesehen ist, während der andere der Ventilsitze am Kernbereich vorgesehen ist, entweder unmittelbar am Kern oder einem im Kern angeordneten Ventilsitzbauteil bzw. -element. Die Ausführungsform mit einem ersten und einem zweiten Ventilsitz eignet sich insbesondere für die Ausbildung des Elektromagnetventils als 3/2 Wegeventil, bevorzugt mit einem im unbestromten Zustand geschlossenen ersten Ventilsitz.

Ein weiterer wesentlicher Vorteil des erfindungsgemäßen Elektromagnetventils besteht darin, dass der Anker im Vergleich zu einer Vollmateriallösung deutlich gewichtsreduziert ist. Grundsätzlich ist es möglich den zumindest abschnittsweise hülsen- bzw. hülsenstumpfförmigen Anker als Drehteil auszubilden, wobei eine kostengünstige Fertigung durch Sintern oder Kaltfließpressen, jedenfalls als formgebundenes Bauteil bevorzugt ist. Die resultierende Gewichtsreduzierung ist auch für die magnetische Auslegung, u.a. den Kupferanteil der Wicklung von Vorteil, da bei gleicher Vibrationssicherheit eine vorzugsweise vorgesehene Rückstellfeder, gegen deren Federkraft der Anker bei Bestromung der Wicklung axial verstellbar ist, schwächer ausgelegt werden kann, als bei einem vergleichbaren Vollmaterialanker.

In Weiterbildung der Erfindung ist mit Vorteil vorgesehen, dass der Führungsdom soweit in den Innenkanal hineinragt, dass er sich und vorzugsweise auch ein am Führungsdom vorgesehener erster Ventilsitz radial innerhalb der Wicklung befindet. Besonders bevorzugt ist es, wenn der Führungsdom axial über mindestens ein Viertel der Axialerstreckung der Wicklung bzw. des Wicklungsabschnittes in den Wicklungsabschnitt hineinragt, ganz besonders bevorzugt über mindestens ein Drittel der Axialerstreckung des Wicklungsabschnittes, noch weiter bevorzugt, zumindest näherungsweise um die hälftige Axialerstreckung des Wicklungsabschnittes, so dass ein minimale axiale Baulänge bei guter Funktionalität und bauraumoptimierter Anbringung des Kerns, bevorzugt innerhalb des Spulenträgers möglich ist.

Besonders zweckmäßig ist es, wenn das radiale Führungsspiel zwischen dem Außenumfang des Führungsdoms und dem Innenumfang des Ankers kleiner ist als ein Radialspiel zwischen dem Außenumfang des Ankers und dem Innenumfang des Innenkanals des Spulenträgers, um in soweit ein im Hinblick auf eine minimierte Ankerklemmneigung optimiertes Ventil zu erhalten.

Besonders zweckmäßig ist es, wenn der Kern zumindest abschnittsweise innerhalb des Spulenträgers angeordnet ist, wobei dann der Führungsdom von einem von dem Kern abgewandeten Ende des Wicklungsabschnittes her in diesen hineinragt. Ganz besonders bevorzugt ist dabei eine Ausführungsform, bei der der Kern gegenüber dem Spulenträger in radialer Richtung, insbesondere über eine am Außenumfang des Kerns vorgesehene Ringdichtung und/oder über eine am Innenumfang des Spulenträgers vorgesehene Ringdichtung abgedichtet ist, um einen Druckluftaustritt in axialer Richtung in einem Bereich zwischen Spulenträger und Kern zu vermeiden.

Grundsätzlich ist es möglich, dass der Anker unmittelbar mit dem ersten und ggf. einem zweiten Ventilsitz zusammenwirkt - besonders bevorzugt ist jedoch eine Ausführungsform bei der die Dichtfunktion über ein Dichtelement realisiert ist, weiter bevorzugt über ein Elastomerteil, wobei noch weiter bevorzugt das Dichtelement formschlüssig am Anker festgelegt ist, bevorzugt, indem das Dichtelement eine axiale Durchgangsöffnung, insbesondere stirnseitig, im Anker durchsetzt und den Durchgangsöffnungsrand zu beiden Axialseiten in radialer Richtung übergreift, was beispielsweise durch eine Außenumfangsnut am Dichtelement realisierbar ist. Insbesondere für den bevorzugten Fall, dass das Dichtelement eine Durchgangsöffnung des Ankers zu beiden Axialseiten durchsetzt und sowohl - in Abhängigkeit der Schaltstellung - mit dem Führungsdom, insbesondere einem dort vorgesehenen Ventilsitz, und mit dem Kern oder einem fakultativ im Kern vorgesehenen Ventilsitzbauteil zusammenwirkt, kommt dem Dichtelement eine Doppelfunktion zu.

So wirkt das Dichtelement, insbesondere wenn dieses als Elastomerteil ausgebildet ist, zu beiden axialen Seiten hin als, vorzugsweise einziges, Dämpfungselement, so dass auf die im Stand der Technik gezeigte, aufwändige Federstiftkonstruktion verzichtet wird und hat darüber hinaus eine Dichtfunktion zur Abdichtung des ersten Ventilsitzes und, falls vorhanden, zur Abdichtung des dann gegenüberliegenden zweiten Ventilsitzes. Diese vorteilhafte Ausführung des Elektromagnetventils ist insbesondere dann einfach realisierbar, wenn der einteilig mit dem Spulenträger ausgebildete Führungsdom axial bis radial innerhalb des Wicklungsabschnittes in den Anker hineinragt, wodurch die jeweiligen Wechselwirkungsflächen zur Wechselwirkung mit dem Ventilsitz und dem Kern näher zusammenrücken als im Stand der Technik. Hierdurch ist es konstruktiv vorteilhaft möglich, vorstehend erläuterte Doppelfunktion eines Dichtelementes zu realisieren.

Wollte man eine Einstückigkeit von Dichtung und Dämpfung bei dem aus der DE 41 39 670 C2 bekannten Ventil realisieren, so wäre dies nur äu-ßerst aufwändig mittels Elastomer-Durchvulkanisierung durch den Anker oder Montage eines sehr langen Elastomerbauteils im Anker möglich. In diesem Fall würde die Länge dieses einstückigen Elastomerteils in der Größenordnung der Ankerlänge liegen und durch den elastomertypischen Ausdehnungskoeffizienten zwischen etwa 130 und 185 x 10⁻³mm/K typischerweise mehrere zehntel Millimeter Temperaturausdehnung zeigen, insbesondere im typischen Temperatureinsatzbereich für Kraftfahrzeuge zwischen etwa -40°C und 125°C zzgl. Eigenerwärmung. Diese Ausdehnung müsste im Ankerhub vorgehalten werden, wobei jedoch eine größere Ankerhub-Auslegung bei gleicher Schließkraft eine Überdimensionierung des Magneten mit einem größeren Eisen- und Kupferanteil im Flusskreis erfordert und somit neben einem erhöhten Bauraumbedarf zu erhöhten Herstellungskosten führen würde.

Besonders bevorzugt ist es, wenn die Axialerstreckung des dann sowohl mit der Kernseite als auch mit dem Dom wechselwirkenden Dichtelementes deutlich geringer ist als die Axialerstreckung des Ankers. Bevorzugt beträgt die Axialerstreckung des Dichtelementes weniger als 50%, noch weiter bevorzugt weniger als 40%, ganz besonders bevorzugt weniger als 30% der Axialerstreckung des Ankers. Ganz besonders bevorzugt ist die Axialerstreckung des eine Doppelfunktion erfüllenden Dichtelementes aus einem Wertebereich zwischen etwa 10% und 30%, noch weiter bevorzugt zwischen etwa 15% und 25% der axialen Ankerlänge gewählt.

Alternativ ist es auch denkbar, jedem der Ventilsitze ein eigenes Dichtelement zuzuordnen oder vollständig auf ein vom Anker separates Dichtelement zu verzichten.

Durch eine vorteilhafte weiterbildungsgemäße formschlüssige Verbindung zwischen dem Dichtelement und dem Anker kann auf die sonst üblichen Haftvermittler verzichtet werden. Insbesondere dann, wenn dem Dichtelement, bevorzugt auf der Kernseite, gleichzeitig die Funktion einer Anschlagdämpfung zukommt, sorgt dies für eine Minimierung von Schaltgeräuschen sowie eine Verschleißminimierung durch Vermeidung von metallisch harten Anschlägen und damit einer Steigerung der Lebensdauer.

Wie bereits eingangs angedeutet ist eine Ausführungsform des Elektromagnetventils besonders bevorzugt, bei der der erste Ventilsitz, insbesondere stirnseitig, am Führungsdom angeordnet ist, insbesondere indem der Ventilsitz einteilig mit dem Führungsdom ausgebildet ist. Alternativ ist es, wie erwähnt möglich, den ersten Ventilsitz am Kern oder einem im Kern angeordneten Ventilsitzbauteil anzuordnen, wobei im letztgenannten Fall das Ventilsitzbauteil bevorzugt gleichzeitig einen Druckluftkanal zum Ventilsitz begrenzt.

Für den Fall der Anordnung, vorzugsweise Ausbildung des ersten Ventilsitzes am Führungsdom ist es bevorzugt, wenn innerhalb des Führungsdoms ein, bevorzugt als Zentralkanal ausgebildeter erster Fluidkanal, insbesondere ein Druckluftkanal ausgebildet ist, der ganz besonders bevorzugt einen Versorgungskanal bildet, der von einem Versorgungsanschluss versorgt wird. Die Druckluft kann bei geöffnetem ersten Ventilsitz bevorzugt über mindestens einen am Außenumfang des Führungsdoms vorgesehenen Fluidkanal, insbesondere einen zu einem Arbeitsanschluss führenden Arbeitskanal abgeführt werden. Im Fall des Vorsehens des ersten Ventilsitzes am Kern oder einen am Kern vorgesehenen Ventilsitzelement erfolgt der Zustrom oder Abstrom von Druckluft zu dem bzw. von dem ersten Ventilsitz durch einen innerhalb des Kerns oder eines Ventilsitzbauteils vorgesehenen Kanal.

Vorgenannte Arbeitskanäle am Außenumfang des Führungsdoms werden bevorzugt gebildet von Axialnuten zwischen in Umfangsrichtung beabstandeten Führungsabschnitten bzw. Führungssegmenten, die eine, bevorzugt zylindrische Hüllkontur begrenzen zur Führung des dann bevorzugt hohlzylindrischen Ankers an seinem Innenumfang.

Bei einer Ausführungsform mit zwei axial gegenüberliegenden Ventilsitzen ist es bevorzugt, wenn eine luftleitende Verbindung zwischen einem Ankerinnenraum, vorzugsweise zwischen mindestens einem am Außenumfang des Führungsdoms vorgesehenen Kanal und einem Luftkanal im Kern oder in einem im Kern vorgesehenen Ventilsitzbauteil realisiert ist, insbesondere durch mindestens eine axiale Durchgangsöffnung im Bereich einer Ankerstirnseite, so dass ein Luftaustausch bei am ersten Ventilsitz anliegendem Anker zwischen dem dann geöffneten kernbereichsseitigen zweiten Ventilsitz und dem Ankerinnenraum, vorzugsweise dem dort mündenden umfangsseitigen Luftkanal am Führungsdom ermöglicht ist.

Fertigungstechnisch ist es besonders bevorzugt, wenn der Spulenträger und der Führungsdom als gemeinsames Kunststoffspritzgussteil ausgebildet sind, bevorzugt mit integralem ersten Ventilsitz, was jedoch nicht zwingend ist, wenn der erste Ventilsitz im Bereich des Kerns vorgesehen wird.

Bei einer Ausbildung des Spulenträgers und des Führungsdoms als gemeinsames Kunststoffspritzgussteil ist es bevorzugt, wenn das Material des Kunststoffspritzgussteils reibungsminimierende Beimischungen, insbesondere PTFE enthält, um dann bevorzugt auf eine Gleitbeschichtung am Außenumfang des Führungsdoms zur Verbesserung der tribologischen Eigenschaften verzichten zu können. Auch kann dadurch auf eine kostenintensive Anker-Gleitbeschichtung verzichtet werden.

Besonders zweckmäßig ist es, wenn der Arbeitshub des Ankers durch axiales Verstellen und anschließendes Sichern des Kerns, insbesondere durch Verstemmen eines den Spulenträger axial überragenden Kernabschnittes mit einem metallischen, den magnetischen Fluss leitenden, vorzugsweise als Ventilgehäuse ausgebildeten, Flussleitblechs, einstellbar und/oder eingestellt ist. Hierdurch kann eine optimierte Energieeffizienz des elektromagnetischen Antriebs realisiert werden. Darüber hinaus ist eine derartige Montage bei gegebenen Toleranzen gut beherrschbar.

Die Erfindung führt auch auf ein sicherheitsrelevantes Pneumatiksystem, insbesondere ein (Pneumatik-) Bremssystem für Kraftfahrzeuganwendungen, bevorzugt für Nutzfahrzeuganwendungen. Ganz besonders bevorzugt handelt es sich bei dem sicherheitsrelevanten System um ABS- oder EBS-Bremssystem, bei welchem ein nach dem Konzept der Erfindung ausgebildetes Elektromagnetventil eingesetzt wird, das besonders bevorzugt die Funktion eines ABS-Bremsventils oder eines EBS-Bremsventils übernimmt. Durch das robuste Konstruktionsprinzip ist die Eignung für derartige sicherheitsrelevante elektromagnetische Ventile in sicherheitsrelevanten Pneumatiksystemen gegeben.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: eine geschnittene Darstellung eines als im unbestromten Zustand geschlossenen 2/2-Wegeventils,
- Fig. 2:: eine Querschnittsansicht durch die Ankerführung des Ventils gemäß Fig. 1,
- Fig. 3:: eine Darstellung eines 2/2-Wegeventils in einer im unbestromten Zustand offenen Ausführungsvariante, und
- Fig. 4:: eine mögliche Ausführungsform eines nach dem Konzept der Erfindung ausgebildeten Elektromagnetventils als 3/2-Wegeventils mit zwei axial beabstandeten Ventilsitzen.

In den Figuren sind gleiche Elemente und Elemente mit der gleichen Funktion mit den gleichen Bezugszeichen gekennzeichnet.

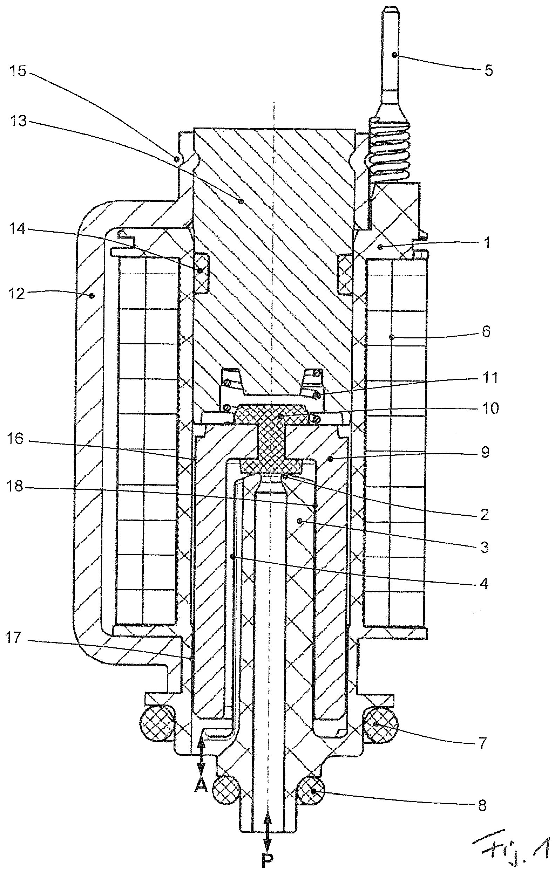

In Fig. 1 ist eine Bauform eines nach dem Konzept der Erfindung ausgebildeten Elektromagnetventils als 2/2-Wegeventil in bei Bestromung geschlossener Ausführung gezeigt. Zu erkennen ist ein aus Kunststoff ausgebildeter Spulenträger 1, der in einem axialen Wicklungsabschnitt eine bestrombare Wicklung 6 trägt. Die Bestromung der Wicklung 6 erfolgt über einen Kontaktpin 5. Der Spulenträger 1 ist einteilig ausgebildet mit einem Führungsdom 3, der von einer von einem Kern 13 abgewandten Seite her axial in den Wicklungsabschnitt hineinragt und der an seinem Außenumfang eine Ankerführung 18 realisiert zur Führung eines Ankers 9 an seinem Innenumfang bei einer Bestromung der Wicklung 6. Zusätzlich ist gemäß einer bevorzugten Variante der Anker 9 an seinem Außenumfang geführt, und zwar am Innenumfang eines Innenkanals des Ankers, in welchen der Führungsdom 3 axial hineinragt.

Bei unbestromter Wicklung 6 wirkt der Anker 9, genauer ein formschlüssig am Anker 9 festgelegtes, hier elastomeres Dichtelement 10, welches eine Durchgangsöffnung im Anker in Richtung eines Ankerinnenraums überragt, mit einem stirnseitig am Führungsdom 3 ausgebildeten ersten Ventilsitz 2 zusammen. In Richtung auf diesen Ventilsitz wird der Anker 9 mittels einer Feder 11 kraftbeaufschlagt, die sich zum einen axial am Kern 13 und zum anderen, axial gegenüberliegend am Anker 9 abstützt.
Bei der Bestromung der Wicklung 6 verläuft der magnetische Fluss innerhalb des Kerns, dann in radialer Richtung nach außen in ein Flussleitblech 12, welches gleichzeitig eine Jochscheibenfunktion ausübt und dann in entgegengesetzte Axialrichtung innerhalb des Flussleitblechs 12 bis zu einem in der Zeichnungsebene unteren Flussleitblechabschnitt, der in einer Umfangsnut des Spulenträgers 1 aufgenommen ist. Dort wird der Radialabstand zum Anker 9 überwunden, innerhalb dessen der Fluss weiter axial über einen Axialluftspalt zwischen Anker und Kern in Richtung Kern verläuft.

Der Kern 13 ist abschnittsweise innerhalb des Innenkanals des Spulenträgers 1 angeordnet und gegenüber diesem mittels einer Ringdichtung 14 abgedichtet. Axial weiter außen ist der Kern axial gesichert über eine Verstemmung 15 mit einem metallischen Flussleitblech 12, welches eine flussleitende Funktion hat.

Bei Bestromung der Wicklung 6 wird der Anker 9 axial in Richtung des Kerns 13 verstellt, an welchem er sich dann über das Dichtelement 10 abstützt, welchem somit nicht nur eine dichtende, sondern auch eine anschlagsdämpfende Funktion zukommt.

Das radiale Führungsspiel im Bereich der Ankerführung 17 ist geringer als ein Radialspiel 16 (Luftspalt) zwischen dem Außenumfang des Ankers 9 und dem Innenumfang des Innenkanals des Spulenträgers im Bereich des axialen Wicklungsabschnittes.

Bei geöffnetem erstem Ventilsitz, d.h. bei bestromter Wicklung 6 kann Druckluft über einen ersten, als Zentralkanal ausgebildeten Fluidkanal, hier ein Versorgungskanal (P) axial, in den Ankerinnenraum strömen und aus diesem in entgegengesetzte Axialrichtung über am Außenumfang des Führungsdoms 3 ausgebildete zweite Fluidkanäle 4 hin zu einem Arbeitsanschluss A. Selbstverständlich kann das Elektromagnetventil auch in entgegengesetzter Richtung durchströmt werden (dann ändern sich die Anschlusszeichnungen entsprechend).

In Einbaulage ist der Versorgungsanschluss gegenüber dem Arbeitsanschluss über eine O-Ringdichtung 8 abgedichtet und der Arbeitsanschluss gegenüber der Umgebung über eine radial weiter außen angeordnete O-Ringdichtung 7.

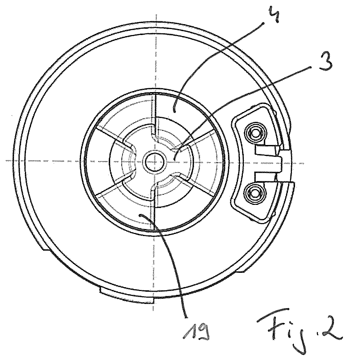

In Fig. 2 ist eine Detailansicht im Rahmen einer Querschnittsansicht des Führungsdoms 3 gezeigt. Zu erkennen sind drei radial vorstehende Führungssegmente 19, wobei zwei in Umfangsrichtung beabstandete der Führungssegmente 19, die eine zylindrische Hüllkontur begrenzen zwischen sich einen Kanal 4 begrenzen, der in dem gezeigten Ausführungsbeispiel bevorzugt als Arbeitsluftkanal dient.

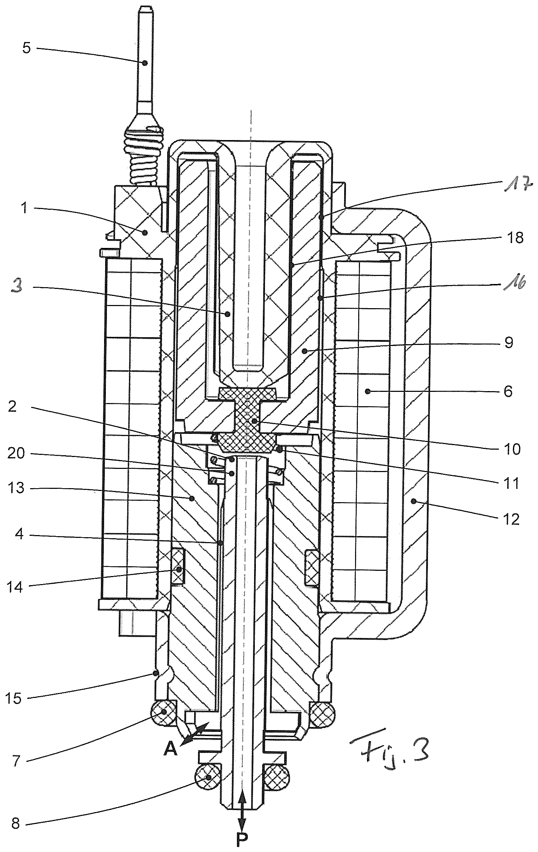

Im Folgenden wird nun das Ausführungsbeispiel gemäß Fig. 3 beschrieben, wobei zur Vermeidung von Wiederholungen im Wesentlichen auf die Unterschiede zu dem Ausführungsbeispiel gemäß den vorstehenden Figuren eingegangen wird. Im Hinblick auf die Gemeinsamkeiten wird auf vorstehendes Ausführungsbeispiel samt Figurenbeschreibung verwiesen.

In Fig. 3 ist ein nach dem Konzept der Erfindung ausgebildetes Elektromagnetventil in der Bauform bei Bestromung geschlossen (normal offen) gezeigt. Zu erkennen ist, dass der erste Ventilsitz 2 nicht wie bei dem vorhergehenden Ausführungsbeispiel am Führungsdom 3 realisiert ist, sondern dem Führungdom 3 gegenüberliegend an einem im Kern 13 aufgenommenen Ventilsitzbauteil 20, welches gleichzeitig einen Druckluftkanal, hier einen Versorgungskanal P beinhaltet, während weitere Kanäle 4, über die Druckluft bei geöffnetem ersten Ventilsitz abströmen kann, am Außenumfang des Ventilsitzbauteil 20 realisiert sind.
Die Feder 19 befindet sich auch bei dem gezeigten Ausführungsbeispiel axial zwischen dem Anker 9 und dem Kern 13. Wie bei dem Ausführungsbeispiel gemäß Fig. 1 umgreift auch hier der Spulenträger 1 axial außen in radialer Richtung den Anker 3, um dann axial bis in den Wicklungsabschnitt in Form des Führungsdoms 3 hineinzuragen.

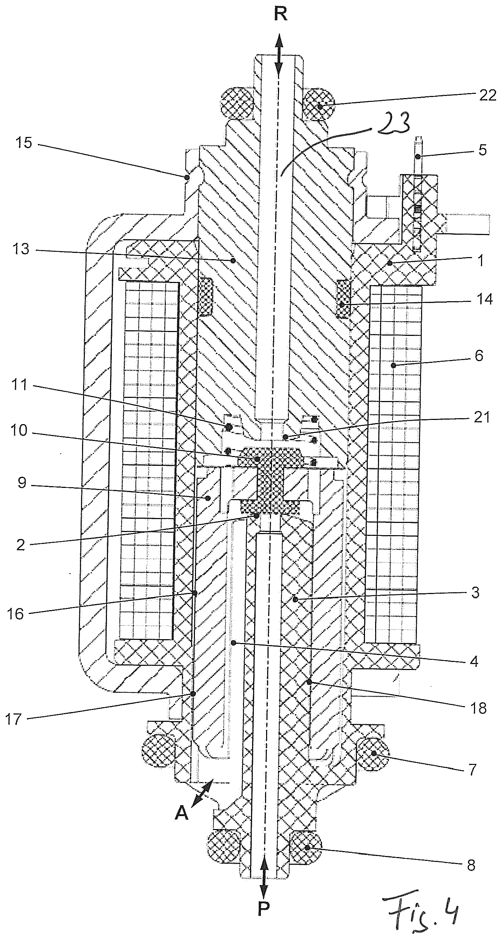

Das Ausführungsbeispiel eines Elektromagnetventils gemäß Fig. 4 umfasst zusätzlich zu dem ersten, am Führungsdom 3 ausgebildeten Ventilsitz 2 einen zweiten Ventilsitz 21, der axial gegenüberliegend, hier beispielhaft unmittelbar am Kern 13 ausgebildet ist, wobei jedoch eine Anordnung an einem Ventilsitzelement, welches im Kern 13 aufgenommen ist, alternativ möglich ist.

Der Anker 9 wirkt in dem gezeigten Ausführungsbeispiel bei Bestromung der Wicklung 6 über das Dichtelement 10 mit dem zweiten Ventilsitz zusammen und liegt bei fehlender Bestromung über das Dichtelement 10 am ersten Ventilsitz 2 an.

Die Kanäle 4 am Außenumfang des Führungsdoms 3 bzw. ein Ankerinnenraum ist dauerhaft luftleitend verbunden mit einem Bereich radial benachbart des zweiten Ventilsitzes 21, so dass bei geöffnetem zweiten Ventilsitz 21 und folglich geschlossenem ersten Ventilsitz 2 eine fluidleitende Verbindung zwischen Fluidkanal 23 im Kern 13 bzw. alternativ einem Ventilsitzelement und den Kanälen 4 besteht, während bei geöffnetem erstem Ventilsitz diese Verbindung unterbrochen ist und stattdessen eine fluidleitende Verbindung zwischen dem Fluidkanal innerhalb des Führungsdoms und den Kanälen 4 besteht.

Aus Fig. 4 ist zu erkennen, dass dem Kanal R eine O-Ringdichtung 22 zur Abdichtung gegenüber der Umgebung zugeordnet ist.

### Bezugszeichenliste

- 1: Spulenträger
- 2: erster Ventilsitz
- 3: Führungsdom
- 4: Kanäle
- 5: Kontaktpin
- 6: Wicklung
- 7: O-Ringdichtung
- 8: O-Ringdichtung
- 9: Anker
- 10: Dichtelement
- 11: Feder
- 12: Flussleitblech
- 13: Kern
- 14: Ringdichtung
- 15: Verstemmung
- 16: Radialspiel
- 17: Ankerführung (Ankeraußenführung)
- 18: Ankerführung (Ankerinnenführung)
- 19: Führungssegmente
- 20: Ventilsitzbauteil
- 21: zweiter Ventilsitz
- 22: O-Ringdichtung
- 23: Fluidkanal
- P: Versorgungskanal
- A: Arbeitsanschluss
- R: Kanal

## Patentansprüche

1. Elektromagnetventil, insbesondere für sicherheitsrelevante Pneumatiksysteme in Kraftfahrzeugen, mit einem durch Bestromen einer elektrischen Wicklung (6) axial innerhalb eines Innenkanals eines die Wicklung (6) an einem Wicklungsabschnitt tragenden Spulenträgers relativ zu einem Kern (13) sowie relativ zu einem ersten Ventilsitz (2) verstellbaren Anker (9),
**dadurch gekennzeichnet,**
**dass** in dem Anker (9) ein Führungskanal angeordnet ist, in den axial ein einteilig mit dem Spulenträger (1) ausgebildeter Führungsdom (3) zum Führen des Ankers (9) bei seiner axialen Verstellbewegung hineinragt.

2. Elektromagnetventil nach Anspruch 1,
**dadurch gekennzeichnet,**
**dass** der Führungsdom (3) axial, vorzugsweise über mindestens ein Viertel der Axialerstreckung der Wicklung (6), in den Wicklungsabschnitt hineinragt.

3. Elektromagnetventil nach einem der Ansprüche 1 oder 2,
**dadurch gekennzeichnet,**
**dass** ein radiales Führungsspiel zwischen dem Außenumfang des Führungsdoms (3) und dem Innenumfang des Ankers (9) kleiner ist als ein Radialspiel zwischen dem Außenumfang des Ankers (9) und dem Innenumfang des Innenkanals des Spulenträgers (1).

4. Elektromagnetventil nach einem der vorhergehenden Ansprüche,
**dadurch gekennzeichnet,**
**dass** der Kern (13) zumindest abschnittweise innerhalb des Spulenträgers angeordnet ist und dass der Führungsdom (3) von einem von dem Kern (13) abgewandten Ende des Wicklungsabschnittes in diesen hineinragt.

5. Elektromagnetventil nach einem der vorhergehenden Ansprüche,
**dadurch gekennzeichnet,**
**dass** der Anker (9) über ein, bevorzugt als Elastomerteil, ausgebildetes Dichtelement (10) mit dem ersten Ventilsitz (2) zusammenwirkend ausgebildet und angeordnet ist.

6. Elektromagnetventil nach Anspruch 5,
**dadurch gekennzeichnet,**
**dass** das Dichtelement (10) formschlüssig an dem Anker (9) festgelegt ist, bevorzugt in dem es in einer Durchgangsöffnung des Ankers (9) gehalten ist und einen Durchgangsöffnungsrand an beiden Axialseiten in radialer Richtung übergreift.

7. Elektromagnetventil nach einem der Ansprüche 5 oder 6,
**dadurch gekennzeichnet,**
**dass** sich der Anker (9) bei in einer von dem ersten Ventilsitz (2) axial weg verstellten Schaltstellung über das Dichtelement (10) an einem dem ersten Ventilsitz (2) gegenüberliegenden Bauteil, bevorzugt dem Kern (13), abstützt.

8. Elektromagnetventil nach einem der vorhergehenden Ansprüche,
**dadurch gekennzeichnet,**
**dass** der erste Ventilsitz (2), insbesondere stirnseitig, an dem Führungsdom (3) angeordnet ist, vorzugsweise durch einteilige Ausbildung mit dem Führungsdom (3), oder dass der erste Ventilsitz (2) am Kern (13) oder einem im Kern (13) angeordneten Ventilsitzbauteil (20) angeordnet ist.

9. Elektromagnetventil nach einem der vorhergehenden Ansprüche,
**dadurch gekennzeichnet,**
**dass** dem ersten Ventilsitz (2) ein sich axial innerhalb des Führungsdoms (3) erstreckender, bevorzugt als Zentralkanal und/oder Versorgungskanal (P) ausgebildeter, erster Fluidkanal, bevorzugt ein Druckluftkanal, und/oder ein, bevorzugt am Außenumfang des Führungsdoms (3) vorgesehener, bevorzugt als Arbeitskanal (A) ausgebildeter zweiter Fluidkanal, bevorzugt ein Druckluftkanal, zugeordnet ist.

10. Elektromagnetventil nach einem der vorhergehenden Ansprüche,
**dadurch gekennzeichnet,**
**dass** der Führungsdom (3), zumindest in einem axialen Führungsabschnitt, eine zylindrische Hüllkontur aufweist und/oder in Umfangsrichtung über axiale Umfangsnuten beabstandete Führungsstege aufweist, die zwischen sich zweite Fluidkanäle, insbesondere Druckluftkanäle, begrenzen.

11. Elektromagnetventil nach einem der vorhergehenden Ansprüche,
**dadurch gekennzeichnet,**
**dass** das Elektromagnetventil einen axial von dem ersten Ventilsitz (2) beabstandeten, vorzugsweise am Kern (13) angeordneten oder einteilig mit dem Kern (13) ausgebildeten zweiten Ventilsitz (21) aufweist.

12. Elektromagnetventil nach einem der vorhergehenden Ansprüche,
**dadurch gekennzeichnet,**
**dass** der Spulenträger (1) und der Führungsdom (3) als gemeinsames Kunststoffspritzgussteil ausgebildet sind, bevorzugt mit integralem ersten Ventilsitz (2).

13. Elektromagnetventil nach Anspruch 12,
**dadurch gekennzeichnet,**
**dass** das Material des, vorzugsweise gleitbeschichtungsfreien, Kunststoffspritzgussteils reibungsminimierende Beimengungen, insbesondere PTFE, enthält.

14. Elektromagnetventil nach einem der vorhergehenden Ansprüche,
**dadurch gekennzeichnet,**
**dass** ein Arbeitshub des Ankers (9) durch axiales Verstellen und Sichern des Kerns (13), insbesondere durch Verstemmen eines den Spulenträger (1) axial überragenden Kernabschnittes mit einem metallischen, den magnetischen Fluss leitenden, vorzugsweise als Ventilgehäuse ausgebildeten, Flussleitblech (12), einstellbar oder eingestellt ist.

15. Sicherheitsrelevantes Pneumatiksystem, insbesondere Bremssystem, für Kraftfahrzeuganwendungen, bevorzugt für Nutzfahrzeuganwendungen, vorzugsweise ABS- oder EBS-System, mit einem als ABS-Bremsventil bzw. EBS-Bremsventil ausgebildeten Elektromagnetventil nach einem der vorhergehenden Ansprüche.

## Claims

1. An electromagnetic valve, in particular for safety-relevant pneumatic systems in motor vehicles, with an armature (9), which, by means of current supplied to an electrical winding (6), can be displaced axially relative to a core (13) and relative to a valve seat (2), inside an inner channel of a coil support carrying the winding (6) on a winding section,
**characterized in**
**that** in the armature (9) a guide channel is arranged, in which a guide pin (3), formed integrally with the coil carrier (1), axially protrudes for guiding the armature (9) during its axial displacement.

2. The electromagnetic valve according to claim 1,
**characterized in**
**that** the guide pin (3) protrudes axially into the winding section, preferably over at least a quarter of the axial extension of the winding (6).

3. The electromagnetic valve according to either of claims 1 or 2,
**characterized in**
**that** a radial guide clearance between the outer circumference of the guide pin (3) and the inner circumference of the armature (9) is smaller than a radial clearance between the outer circumference of the armature (9) and the inner circumference of the inner channel of the coil support (1).

4. The electromagnetic valve according to any one of the previous claims,
**characterized in**
**that** the core (13), at least in some sections, is arranged inside the coil support, and that the guide pin (3) protrudes from one end of the winding section facing away from the core (13) into said winding section.

5. The electromagnetic valve according to any one of the previous claims,
**characterized in**
**that** the armature (9) is designed and arranged to cooperate with the first valve seat (2) via a sealing element (10), preferably designed as an elastomer part.

6. The electromagnetic valve according to claim 5,
**characterized in**
**that** the sealing element (10) is fixed to the armature (9) in a positively fitting manner, preferably by virtue of the fact that it is held in a through-opening of the armature (9) and overlaps a rim of the through-opening on both axial sides in a radial direction.

7. The electromagnetic valve according to either of claims 5 or 6,
**characterized in**
**that** in a switching position displaced axially away from the first valve seat (2), the armature (9) is supported via the sealing element (10) on a component located opposite the first valve seat (2), preferably the core (13).

8. The electromagnetic valve according to any one of the previous claims,
**characterized in**
**that** the first valve seat (2), in particular on the end face thereof, is arranged on the guide pin (3), preferably by means of an integral design with the guide pin (3), or that the first valve seat (2) is arranged on the core (13) or else on a valve-seat component (20) which is arranged in the core (13).

9. The electromagnetic valve according to any one of the previous claims,
**characterized in**
**that** the first valve seat (2) is assigned a first fluid channel extending axially within the guide pin (3), preferably designed as a central channel and/or supply channel (P), preferably a compressed air channel, and/or a second fluid channel, preferably provided on the outer circumference of the guide pin (3), preferably designed as a working channel (A), preferably a compressed-air channel.

10. The electromagnetic valve according to any one of the previous claims,
**characterized in**
**that** the guide pin (3), at least in an axial guide section, has a cylindrical shell contour and/or has guide bars, spaced apart in the circumferential direction via axial peripheral grooves, which between themselves bound second fluid channels, in particular compressed-air channels.

11. The electromagnetic valve according to any one of the previous claims,
**characterized in**
**that** the electromagnetic valve has a second valve seat (21), which is axially spaced apart from the first valve seat (2) and preferably arranged on the core (13) or formed integrally with the core (13).

12. Electromagnetic valve according to any one of the previous claims,
**characterized in**
**that** the coil support (1) and the guide pin (3) are designed as a common plastic injection-moulded part, preferably with an integral first valve seat (2).

13. The electromagnetic valve according to claim 12,
**characterized in**
**that** the material of the plastic injection moulded part, which is preferably lacks a slide coating, contains friction-minimizing admixtures, in particular PTFE.

14. The electromagnetic valve according to any one of the previous claims,
**characterized in**
**that** a working stroke of the armature (9) is or can be adjusted by axial displacement and securing of the core (13), in particular by fixing in place a core section axially projecting beyond the coil support (1) with a metallic flux guide plate (12), which is conductive for magnetic flux and preferably designed as a valve housing.

15. A safety-relevant pneumatic system, in particular braking system for automotive applications, preferably for commercial vehicle applications, preferably an ABS or EBS system, having an electromagnetic valve according to any of the previous claims designed as an ABS brake valve or EBS brake valve.

## Revendications

1. Electrovanne, en particulier pour des systèmes pneumatiques ayant un impact sur la sécurité dans des véhicules automobiles, avec un induit (9) déplaçable par alimentation d'un enroulement électrique (6) axialement à l'intérieur d'un canal intérieur d'un support de bobine portant l'enroulement (6) sur une partie d'enroulement par rapport à un noyau (13) ainsi que par rapport à un premier siège de vanne (2), **caractérisée en ce qu'**un canal de guidage est disposé dans l'induit (9), dans lequel un dôme de guidage (3) destiné au guidage de l'induit (9) et formé d'une seule pièce avec le support de bobine (1) pénètre axialement lors de son mouvement de déplacement axial.

2. Electrovanne selon la revendication 1, **caractérisée en ce que** le dôme de guidage (3) pénètre axialement, de préférence sur au moins un quart de l'extension axiale de l'enroulement (6), dans la partie d'enroulement.

3. Electrovanne selon une des revendications 1 ou 2, **caractérisée en ce qu'**un jeu de guidage radial entre le pourtour extérieur du dôme de guidage (3) et le pourtour intérieur de l'induit (9) est plus petit qu'un jeu radial entre le pourtour extérieur de l'induit (9) et le pourtour intérieur du canal intérieur du support de bobine (1).

4. Electrovanne selon l'une quelconque des revendications précédentes, **caractérisée en ce que** le noyau (13) est disposé au moins en partie à l'intérieur du support de bobine et **en ce que** le dôme de guidage (3) pénètre dans celui-ci à partir de l'extrémité de la partie d'enroulement située à l'opposé du noyau (13).

5. Electrovanne selon l'une quelconque des revendications précédentes, **caractérisée en ce que** l'induit (9) est configuré et disposé de façon à coopérer avec le premier siège de vanne (2) au moyen d'un élément d'étanchéité (10) constitué de préférence par une pièce en élastomère.

6. Electrovanne selon la revendication 5, **caractérisée en ce que** l'élément d'étanchéité (10) est fixé par emboîtement sur l'induit (9), de préférence par le fait qu'il est maintenu dans une ouverture traversante de l'induit (9) et qu'il recouvre en direction radiale un bord de l'ouverture de passage sur les deux côtés axiaux.

7. Electrovanne selon une des revendications 5 ou 6, **caractérisée en ce que** l'induit (9) s'appuie, dans le cas d'une position de commutation éloignée du premier siège de vanne (2), par l'intermédiaire de l'élément d'étanchéité (10) sur une pièce opposée au premier siège de vanne (2), de préférence sur le noyau (13).

8. Electrovanne selon l'une quelconque des revendications précédentes, **caractérisée en ce que** le premier siège de vanne (2) est disposé, en particulier frontalement, sur le dôme de guidage (3), de préférence par formation en une pièce avec le dôme de guidage (3), ou **en ce que** le premier siège de vanne (2) est disposé sur le noyau (13) ou sur un composant du siège de vanne (20) disposé dans le noyau (13).

9. Electrovanne selon l'une quelconque des revendications précédentes, **caractérisée en ce qu'**au premier siège de vanne (2) est associé un premier canal de fluide, de préférence un canal d'air comprimé, s'étendant axialement à l'intérieur du dôme de guidage (3) et réalisé de préférence comme canal central et/ou canal d'alimentation (P), et/ou un deuxième canal de fluide, de préférence un canal d'air comprimé, prévu de préférence à la périphérie extérieure du dôme de guidage (3) et réalisé de préférence comme canal de travail (A).

10. Electrovanne selon l'une quelconque des revendications précédentes, **caractérisée en ce que** le dôme de guidage (3) présente un contour d'enveloppe cylindrique au moins dans une partie de guidage axiale et/ou présente des nervures de guidage espacées en direction périphérique par des rainures périphériques axiales, qui limitent entre elles des deuxièmes canaux de fluide, en particulier des canaux d'air comprimé.

11. Electrovanne selon l'une quelconque des revendications précédentes, **caractérisée en ce que** l'électrovanne présente un deuxième siège de vanne (21) axialement espacé du premier siège de vanne (2), de préférence disposé sur le noyau (13) ou formé d'une pièce avec le noyau (13).

12. Electrovanne selon l'une quelconque des revendications précédentes, **caractérisée en ce que** le support de bobine (1) et le dôme de guidage (3) sont réalisés sous la forme d'une pièce commune moulée par injection en matière plastique, de préférence avec le premier siège de vanne intégré (2).

13. Electrovanne selon la revendication 12, **caractérisée en ce que** le matériau de la pièce moulée par injection en matière plastique, de préférence sans revêtement de glissement, contient des ajouts minimisant le frottement, en particulier du PTFE.

14. Electrovanne selon l'une quelconque des revendications précédentes, **caractérisée en ce qu'**une course de travail de l'induit (9) peut être ou est réglée par déplacement axial et blocage du noyau (13), en particulier par matage d'une partie de noyau dépassant axialement le support de bobine (1) avec un déflecteur de flux métallique (12), conduisant le flux magnétique, réalisé de préférence en forme de corps de vanne.

15. Système pneumatique ayant un impact sur la sécurité, en particulier système de freinage pour des applications dans des véhicules automobiles, de préférence pour des applications dans des véhicules utilitaires, de préférence système ABS ou EBS, avec une électrovanne selon l'une quelconque des revendications précédentes, réalisée sous la forme d'une vanne de freinage ABS ou d'une vanne de freinage EBS.
